(19) Europäisches Patentamt
European Patent Office
Office européen des brevets

(11) **EP 2 314 983 B1**

(12) **EUROPEAN PATENT SPECIFICATION**

(45) Date of publication and mention
of the grant of the patent:
**12.12.2012 Bulletin 2012/50**

(51) Int Cl.:
***G01B 9/02*** (2006.01)

(21) Application number: **10187107.7**

(22) Date of filing: **11.10.2010**

(54) **Heterodyne interferometer**

Heterodyninterferometer

Interféromètre hétérodyne

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.10.2009 JP 2009243060**

(43) Date of publication of application:
**27.04.2011 Bulletin 2011/17**

(73) Proprietor: **Canon Kabushiki Kaisha
Tokyo 146-8501 (JP)**

(72) Inventor: **Ishizuka, Ko
Tokyo 146-8501 (JP)**

(74) Representative: **TBK
Bavariaring 4-6
80336 München (DE)**

(56) References cited:
**US-A- 5 436 724**

- CHOI HYUNSEUNG ET AL: "Novel phase measurement technique of the heterodyne laser interferometer", REVIEW OF SCIENTIFIC INSTRUMENTS, AIP, MELVILLE, NY, US, vol. 76, no. 9, 2 September 2005 (2005-09-02), pages 93105-093105, XP012079689, ISSN: 0034-6748
- MINSUK HONG ET AL: "Adaptive Nonlinearity Compensation of Heterodyne Laser Interferometer", 1 January 2006 (2006-01-01), KNOWLEDGE-BASED INTELLIGENT INFORMATION AND ENGINEERING SYSTEMS LECTURE NOTES IN COMPUTER SCIENCE; LECTURE NOTES IN ARTIFICIAL INTELLIGENCE;LNCS, SPRINGER, BERLIN, DE, PAGE(S) 545 - 552, XP019046185, ISBN: 978-3-540-46537-9 * the whole document *
- NOH-BIN YIM ET AL: "Dual mode phase measurement for optical heterodyne interferometry; Dual mode phase measurement", MEASUREMENT SCIENCE AND TECHNOLOGY, IOP, BRISTOL, GB, vol. 11, no. 8, 1 August 2000 (2000-08-01) , pages 1131-1137, XP020063001, ISSN: 0957-0233, DOI: DOI: 10.1088/0957-0233/11/8/306

EP 2 314 983 B1

**Description**

Field of the Invention

The present invention relates to a heterodyne interferometer.

Description of the Related Art

A heterodyne method of a light-interference measurement apparatus ("heterodyne interferometer") is used as an apparatus configured to measure a physical amount such as an object's displacement amount and moving velocity, with a resolution (resolving power) of a submicron order (see Japanese Patent No. 2,845,700).

A typical example of the heterodyne interferometer is a Michelson (length-measuring) interferometer configured to count a difference between a frequency-modulated signal (heterodyne signal) and a reference frequency signal. This apparatus converts a light flux from a laser light source into two light fluxes having frequencies and polarization azimuths that are different from each other (referred to as "two-frequency light fluxes" hereinafter) utilizing an acousto-optical element, and synthesizes these two-frequency light fluxes in the same axis. The reference frequency signal is an exact signal applied to the acousto-optical element.

The two-frequency light flux is split into p-polarized light and s-polarized light having different frequencies by a polarization beam splitter. The p-polarized light is reflected by a movement corner cube mirror provided to a moving object and returned to the polarization beam splitter. The s-polarized light is reflected by a fixed reference corner cube mirror and returned to the polarization beam splitter. These p-polarized light and s-polarized light are again synthesized by the polarization beam splitter, pass the polarizing plate whose transmission axis azimuth is 45° (mixture polarizer), interfere with each other, and are photoelectrically converted by a light-receiving element. Thereby, the frequency-modulated signal is obtained.

A frequency of the frequency-modulated signal is equal to a (reference) frequency of the reference frequency signal when a moving velocity of the movement corner cube mirror is zero. As the moving object moves away from the polarization beam splitter, the frequency of the frequency-modulated signal decreases, and as the moving object moves towards the polarization beam splitter, the frequency increases.

According to the Michelson interferometer, the frequency of the frequency-modulated signal is thus modulated around the reference frequency based on the moving direction and the moving velocity of the movement corner cube mirror.

In order to obtain movement information of the moving object from the frequency-modulated signal, Japanese Patent No. 2,845,700 discloses a method of counting a difference between the reference frequency signal and the frequency-modulated signal utilizing a phase meter/accumulator and of outputting a result as the movement information.

However, the above Michelson interferometer has an insufficiently low resolution and precision because the counting unit (resolution) in the phase meter/accumulator is as low as the frequency of a sine periodical signal.

In order to improve the resolution, one known method multiplies the frequency-modulated signal and the reference frequency signal by N times, and outputs the difference as the movement information. Nevertheless, since the frequency counted in the counter (phase meter/accumulator) is multiplied N times and thus too high, circuit designs of the counter and the signal processor may become difficult, a complex signal processing algorithm may be required, or a amount of heat generated from the circuit may increase.

Another known method obtains positional or velocity information by directly converting a signal of about several MHz into a digital signal at an A/D converter, and calculating a phase at a signal processing unit that includes a FPGA or a CPU. Nevertheless, it is generally difficult to process high frequency heterodyne signals.

Prior art which is related to this field of technology can be found in the following non-patent literature Choi Hyunseung et al, Review of Scientific Instruments, vol. 76, no. 9, 2005, pages 93105-093105, disclosing a novel phase measurement technique of the heterodyne laser interferometer, patent document US 5,436,724 disclosing an apparatus for measuring relative movement using a diffraction grating having an orthogonally polarized input beam, non-patent literature Minsuk Honk et al, Knowledge-based Intelligent Information and Engineering Systems Lecture Notes in Computer Science, pages 545-552, 2006, disclosing an adaptive nonlinearity compensation of heterodyne laser interferometer, and Yim Noh-Bin et al, Measurement Science and Technology, vol. 11, no. 8, 2000, pages 1131-1137 disclosing a dual mode phase measurement for optical heterodyne interferometry.

SUMMARY OF THE INVENTION

The present invention provides a heterodyne interferometer that has an advantage in terms of measurement resolution.

The present invention in its first aspect provides a heterodyne interferometer as specified in claims 1 to 4.

Further features of the present invention will become apparent from the following description of exemplary embodiments with reference to the attached drawings.

BRIEF DESCRIPTION OF THE DRAWINGS

FIG. 1 is a block diagram illustrating a structure of a heterodyne interferometer (interferometer encoder including a diffraction grating) according to a first embodiment (not claimed).
FIG. 2 is a block diagram illustrating a structure of a heterodyne interferometer (Michelson interferometer) according to a second embodiment (not claimed).
FIG. 3 is a block diagram illustrating a structure used to remove influence of an error of a 90° phase meter according to a third embodiment (not claimed).
FIG. 4 is a block diagram illustrating a structure of a heterodyne interferometer (Michelson interferometer) according to an embodiment of the present invention.
FIG. 5 is a block diagram illustrating a structure of a heterodyne interferometer (interferometer encoder including a diffraction grating) according to another embodiment of the present invention.

DESCRIPTION OF THE EMBODIMENTS

Referring now to the accompanying drawings, a description will be given of embodiments of the present invention.

FIRST EMBODIMENT

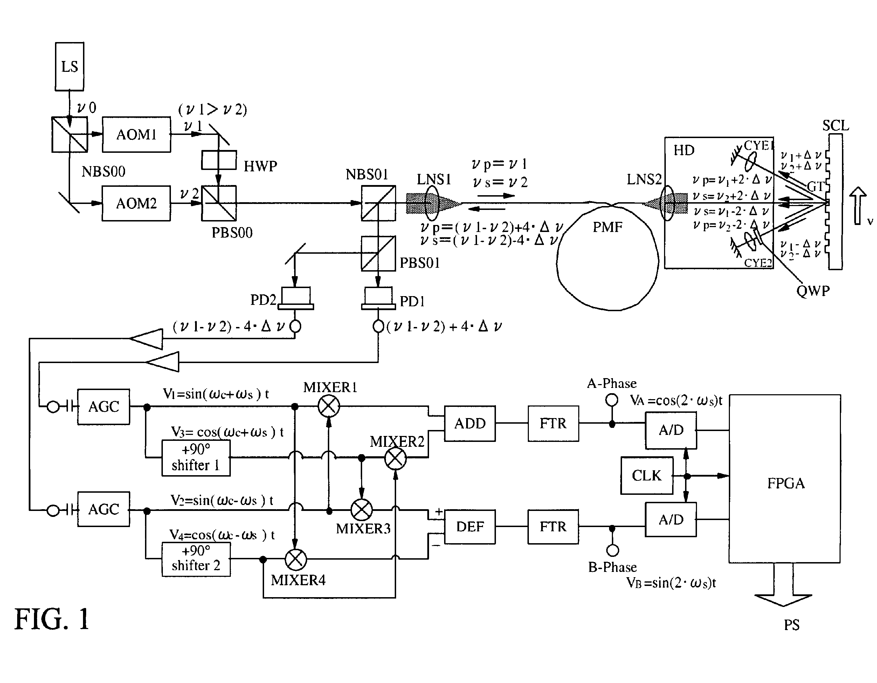

FIG. 1 illustrates an interferometer encoder including a diffraction grating as a heterodyne interferometer according to a first embodiment, which is not part of the claimed invention.

A parallel light flux (with a frequency of v0) that is linearly polarized light emitted in a 0° azimuth emitted from a laser light source LS is split into two by a beam splitter NBS00. A reflection light flux from the beam splitter NBS00 is converted into a light flux having a frequency of v1=v0+320MHz by an acousto-optical element AOM1, and a transmission light flux through the beam splitter NBS00 is converted into a light flux having a frequency of v2=v0+300MHz by an acousto-optical element AOM2. "v0" is an (original) frequency of the laser light source LS and, for example, is v0=299792458/850×10-9=352.6THz for a laser light source of 850 nm.

A polarization plane of one of these two light fluxes is rotated by 90° by a half waveplate HWP, and these two light fluxes are synthesized with each other in the same axis by a polarization beam splitter PBS00 while their polarization planes are orthogonal to each other, and the resultant light flux enters a polarization plane holding fiber PMF via a lens LNS1. A two-frequency light source includes the laser light source LS, the beam splitter NBS00, the acousto-optical elements AOM1 and AOM2, the half waveplate HWP, and the polarization beam splitter PBS00.

Among these two coaxial light fluxes incident upon the polarization plane holding fiber PMF, the light flux v1 is transmitted as a p-polarized light flux from the polarization plane holding fiber PMF while its polarization direction accords with an f (fast) axis of the polarization plane holding fiber PMF. The light flux v2 is transmitted as an s-polarized light flux from the polarization plane holding fiber PMF while its polarization direction accords with an s (slow) axis of the polarization plane holding fiber PMF. The two light fluxes that are transmitted from the polarization plane holding fiber PMF are converted into parallel light fluxes by a lens LNS2 provided to a detection head (irradiator) HD, and irradiated onto a diffraction grating GT on a scale SCL fixed onto a moving object (not illustrated).

Two +1st order diffracted light fluxes generated by diffractions of the two light fluxes in the diffraction grating GT have frequencies of v1+Δv and v2+Δv, are reflected on a cat's-eye CYE1 that includes a lens and a mirror, and are returned to the optical path in the original azimuth. Again, each of them produces +1st order diffracted light in the diffraction grating GT so that their frequencies can be modulated into v1+2Δv and v2+2Δv, and then enters the polarization plane holding fiber PMF. The light flux having the frequency of v1+2Δv is p-polarized light, and enters the polarization plane holding fiber PMF so that the polarization direction can accord with the f axis. The light flux having the frequency of v2+2Δv is s-polarized light, and enters the polarization plane holding fiber PMF so that the polarization direction can accord with the s axis.

Two -1st order diffracted light fluxes generated by the diffractions of the two light fluxes in the diffraction grating GT have frequencies of v1-Δv and v2-Δv, transmit a quarter waveplate QWP, are reflected on a cat's-eye CYE2, and are returned to the optical path in the original azimuth. Again, each of them transmits the quarter waveplate QWP, produces -1st order diffracted light in the diffraction grating GT so that their frequencies can be modulated into v1-2Δv and v2-2Δv, and enters the polarization plane holding fiber PMF. The light flux having the frequency of v1-2Δv is s-

3

polarized light, and enters the polarization plane holding fiber PMF so that the polarization direction can accord with the f axis. The light flux having the frequency of $\nu2-2\Delta\nu$ is p-polarized light, and enters the polarization plane holding fiber PMF so that the polarization direction can accord with the s axis.

The two p-polarized light fluxes having the frequencies of $\nu1+2\Delta\nu$ and $\nu2-2\Delta\nu$ out of these four light fluxes interfere with each other and become one light flux (first light) that has a first heterodyne interference frequency $\nu1-\nu2+4\Delta\nu$. This resultant light flux is transmitted by the polarization plane holding fiber PMF while its polarization direction accords with the s axis. The two s-polarized light fluxes having the frequencies of $\nu2+2\Delta\nu$ and $\nu1-2\Delta\nu$ interfere with each other and become one light flux (second light) that has a second heterodyne interference frequency $\nu1-\nu2-4\Delta\nu$. This resultant light flux is transmitted by the polarization plane holding fiber PMF while its polarization direction accords with the f axis. These two (or a plurality of) light fluxes having frequencies different from each other are independently transmitted in the polarization plane holding fiber PMF, are emitted from the end surface on the light source side of the polarization plane holding fiber PMF, are reflected by a non-polarization beam splitter NBS01, and enter the following signal generator.

The two light fluxes having frequencies different from each other incident upon the signal processor are split for each polarization component by the polarization beam splitter PBS01. The light flux that has transmitted through the polarization beam splitter PBS01 is an interference light flux having a frequency of $\nu1-\nu2+4\Delta\nu$, and is photoelectrically converted (detected) by one (first) light-receiving element PD1 of two (a plurality of) light-receiving elements. The frequency of the interference light flux, i.e., the frequency of the signal output from the light-receiving element PD1 increases as the scale SCL moves in an arrow direction in FIG. 1.

The light flux that is reflected on the polarization beam splitter PBS01 is an interference light flux having a frequency of $\nu1-\nu2-4\Delta\nu$, and is photoelectrically converted (detected) by the other (second) light-receiving element PD2 among a plurality of light-receiving elements. The frequency of the interference light flux, i.e., the frequency of the signal output from the light-receiving element PD2 decreases as the scale SCL moves in an arrow direction in FIG. 1.

An output signal (first heterodyne signal) from the light-receiving element PD1 and an output signal (second heterodyne signal) from the light-receiving element PD2 are introduced into an auto gain controller AGC so as to normalize their sine signal amplitudes. The resultant heterodyne signals V1(t) and V2(t) can be described as follows:

$$V1(t)=\sin\{(\omega c+\omega s)\bullet t\}$$

$$V2(t)=\sin\{(\omega c-\omega s)\bullet t\}$$

"$\omega c$" is an angular velocity corresponding to a difference between the frequencies $\nu1$ and $\nu2$, and defined as follows:

$$\omega c=2\pi\bullet(\nu1-\nu2)$$

"$+\omega s$" is a variation amount of the angular velocity corresponding to two +1st order diffractions, and "$-\omega s$" is a variation amount of the angular velocity corresponding to two -1st order diffractions.

$$\omega s=2\pi\bullet(4\bullet\Delta\nu)$$

A modulated frequency $\Delta\nu$ can be described as follows:

$$\Delta\nu=v/PT$$

"v" denotes a moving velocity of the scale SCL, and "PT" denotes a pitch of the diffraction grating GT.

Since these relational expressions are used to convert the two heterodyne signal V1(t) and V2(t) into location information and velocity information, the following explanations uses the angular velocities $\omega c$ and $\omega s$ so as to simplify the expressions.

The first heterodyne signal V1(t) (first signal) is input to a first +90° phase shifter (shifter1). Thereby, a third heterodyne signal (third signal) that has a phase shifting from the first heterodyne signal V1(t) by 90° is generated.

$$V3(t)=\sin\{(\omega c+\omega s)\cdot t+\pi/2\}$$

The second heterodyne signal V2 (t) (second signal) is input to a second +90° phase shifter (shifter2). Thereby, a fourth heterodyne signal (fourth signal) that has a phase shifting from the second heterodyne signal V2(t) by 90° is generated.

$$V4(t)=\sin\{(\omega c-\omega s)\cdot t+\pi/2\}$$

A first periodic signal VA and a second periodic signal VB are generated by the following operations utilizing thus obtained four heterodyne signals V1(t), V2(t), V3(t), and V4(t).

The first periodic signal VA is generated as follows by multipliers MIXER1 and MIXER2 and an adder ADD:

$$VA=\{V1(t)\times V2(t)\}+\{V3(t)\times V4(t)\}=\cos(2\cdot\omega s\cdot t)$$

In other words, the first periodic signal VA is generated through an addition (or subtraction) between a signal that is obtained by multiplying the first heterodyne signal and the second heterodyne signal and a signal that is obtained by multiplying the third heterodyne signal and the fourth heterodyne signal.

The second periodic signal VB is generated as follows by multipliers MIXER3 and MIXER4 and a subtracter DEF:

$$VB=\{V2(t)\times V3(t)\}-\{V4(t)\times V1(t)\}=\sin(2\cdot\omega s\cdot t)$$

In other words, the second periodic signal VB is generated through a subtraction (or addition) between a signal that is obtained by multiplying the first heterodyne signal and the third heterodyne signal and a signal that is obtained by multiplying the second heterodyne signal and the fourth heterodyne signal.

When phase shifts by the two +90° phase shifters have errors, the two periodic signals VA and VB contain a small amount of the frequency component twice as high as the frequency of the heterodyne signal. Thus, this embodiment passes the periodic signals VA and VB through a filter FTR for highly accurate measurements.

The first periodic signal VA and the second periodic signal VB as two sine signals that have a phase difference of 90° are obtained. These periodic signals VA and VB can be expanded as follows:

$$VA=\cos\{2\cdot 2\pi\cdot(4\cdot\Delta\nu)\cdot t\}=\cos\{8\cdot 2\pi\cdot v/PT\cdot t\}$$

$$=\cos\{8\cdot 2\pi\cdot x/PT\}$$

$$VB=\sin(2\cdot 2\pi\cdot(4\cdot\Delta\nu)\cdot t)=\sin\{8\cdot 2\pi\cdot v/PT\cdot t\}$$

$$=\sin\{8\cdot 2\pi\cdot x/PT\}$$

Here, x is a displacement amount, and x=v•t is established.

These two periodic signals VA and VB are signals equivalent to a two-phase signal obtained by the conventional interferometric encoder including a diffraction grating. However, the resolution of this embodiment is twice as high as that of the prior art since the signal of this embodiment provides eight periods of the sine waves for a displacement x corresponding to one pitch of the diffraction grating GT.

The periodic signals VA and VB are respectively converted into digital signals by first and second analog-to-digital converters A/D while the timings of the conversions are controlled by a clock signal from a clock circuit CLK, and input into a processing unit FPGA. The processing unit FPGA generates and outputs highly accurate location information PS that represents a position of a moving object utilizing the two digital signals.

This embodiment can generate the two-phase signals (first and second periodic signals) that are equivalent to the signals from the conventional interferometric encoder including a diffraction grating but have higher displacement resolutions, by utilizing two heterodyne signals (first and second signals), the phase shifter, the multipliers, the adder, and the subtracter. In other words, this embodiment can obtain the two-phase signals having high resolutions utilizing a simple circuit configuration without a complex signal processing algorithm. Therefore, this embodiment can highly precisely obtain the location information and the velocity information as the physical amounts concerning the object.

SECOND EMBODIMENT

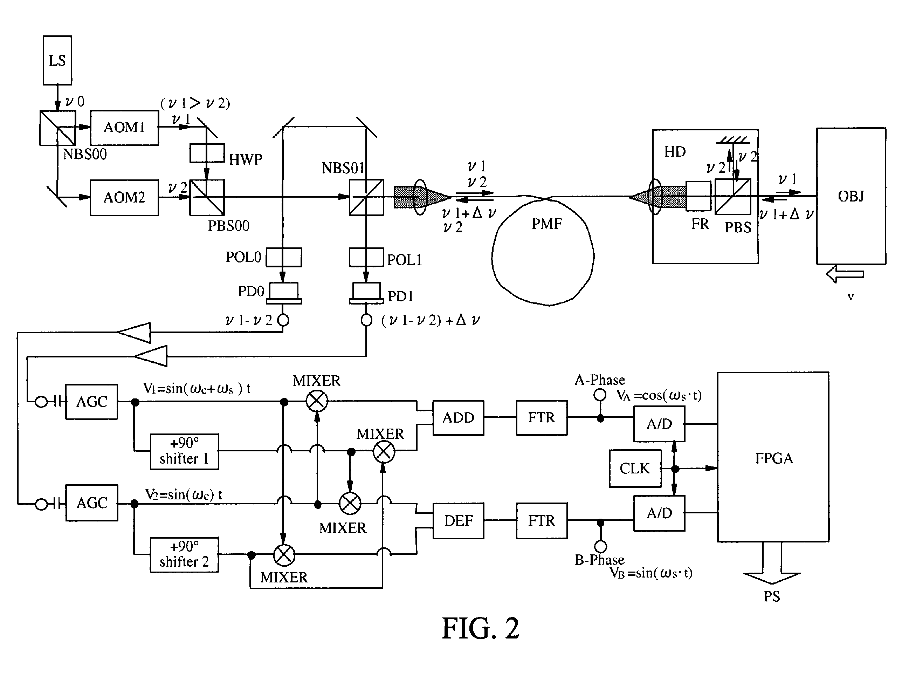

FIG. 2 illustrates a Michelson interferometer as a heterodyne interferometer according to a second embodiment, which is not part of the claimed invention.

A part of the light flux emitted from the two-frequency light source including a laser light source LS, acousto-optical elements AOM1 and AOM2 similar to the first embodiment is reflected on the non-polarization beam splitter NBS01 and extracted. The extracted light flux (second light) enters the signal generator, and is photoelectrically converted (detected) by a (second) light-receiving element PDO via a polarizing plate POLO of a 45° azimuth. This light flux and an output signal (reference frequency signal) from the light-receiving element PDO have the same reference frequency as a frequency difference (v1-v2) of the two-frequency light source.

On the other hand, the light flux that has transmitted through the non-polarization beam splitter NBS01 enters a Faraday element FR in a detection head HD (irradiator) via a polarization plane holding fiber PMF, and its polarization direction is rotated by 45°. The light flux emitted from the Faraday element FR is split by the polarization beam splitter PBS into a light flux having a frequency v1 and a light flux having a frequency v2.

When the light flux having the frequency v1 is reflected on the surface of object OBJ that moves relative to the detection head HD, a light flux having a frequency of v1+Δv is generated. The light flux having the frequency v2 is reflected on the reference reflective surface (fixed side) provided on the detection head HD. The light flux having the frequency v1+Δv and the light flux (with the frequency v2) reflected on the reference reflective surface are again synthesized by the polarization beam splitter PBS, and again enter the Faraday element FR whereby its polarization direction is rotated by 45°. The light flux emitted from the Faraday element FR transmits through the polarization plane holding fiber PMF in the opposite direction.

The light flux (first light) emitted from the polarization plane holding fiber PMF is reflected on the non-polarization beam splitter NBS01, and enters the signal generator. This light flux is photoelectrically converted (detected) by the (first) light-receiving element PD1 via the polarizing plate POL1 of the 45° azimuth. Each of the light flux emitted from the polarization plane holding fiber PMF and the output signal from the light-receiving element PD1 has a frequency that shifts by Δv from a frequency difference (v1-v2) of the two-frequency light source.

V1(t) denotes a heterodyne signal (first signal) whose amplitude has been normalized at an auto gain controller AGC1 after the signal enters the auto gain controller AGC1 from the light-receiving element PD1. V2(t) denotes a (second) signal whose amplitude that has been normalized at an auto gain controller AGC2 after the signal enters the auto gain controller AGC2 from the light-receiving element PD0. The following equations are established:

$$V1(t)=\sin\{(\omega c+\omega s)\cdot t\}$$

$$V2(t)=\sin(\omega c\cdot t)$$

These signals V1(t) and V2(t) are input to the +90° phase shifters (shifter1 and shifter2). Thereby, signals V3(t) and V4(t) having phases that shift by 90° to those of the signals V1(t) and V2(t) are generated.

$$V3(t)=\sin\{(\omega c+\omega s)\cdot t+\pi/2\}$$

$$V4(t)=\sin(\omega c \cdot t + \pi/2)$$

The first periodic signal VA and the second periodic signal VB are generated similar to the first embodiment by the following operations, the multipliers MIXER1 and MIXER2, the adder ADD, and the subtracter DEF:

$$VA=\{V1(t)\times V2(t)\}+\{V3(t)\times V4(t)\}=\cos(\omega s \cdot t)$$

$$VB=\{V2(t)\times V3(t)\}-\{V4(t)\times V1(t)\}=\sin(\omega s \cdot t)$$

Thus, the first periodic signal VA and the second periodic signal VB as two sine signals that have a phase difference of 90° are obtained. The first periodic signal VA and the second periodic signal VB can be expanded as follows:

$$VA=\cos\{2\pi \cdot \Delta\nu \cdot t\}=\cos\{2\pi \cdot 2 \cdot v/\lambda \cdot t\}=\cos\{2 \cdot 2\pi \cdot z/\lambda\}$$

$$VB=\sin(\omega s \cdot t)=\sin\{2\pi \cdot 2 \cdot v/\lambda \cdot t\}=\sin\{2 \cdot 2\pi \cdot z/\lambda\}$$

Here, z is a displacement magnitude, and z=v·t is established.

These two periodic signals VA and VB are signals equivalent to the two-phase signal obtained by conventional Michelson interferometer. However, the resolution of this embodiment is twice as high as that of the prior art since the signal of this embodiment provides two periods of the sine waves for a displacement z corresponding to a wavelength λ.

Similar to the first embodiment, the periodic signals VA and VB are respectively converted into digital signals by first and second analog-to-digital converters A/D via the filter FTR, and input into the processing unit FPGA. The processing unit FPGA generates and outputs highly accurate location information PS that represents a position of a moving object utilizing the two digital signals.

This embodiment can generate the two-phase signals that are equivalent to the signals from the conventional Michelson interferometer but have higher displacement resolutions, by utilizing one heterodyne signal (first signal), the reference frequency signal (second signal), the phase shifter, the multipliers, the adder, and the subtracter. In other words, this embodiment can obtain the two-phase signals having high resolutions utilizing a simple circuit configuration without a complex signal processing algorithm. Therefore, this embodiment can highly precisely obtain the location information and the velocity information as the physical amounts concerning the object OBJ.

THIRD EMBODIMENT

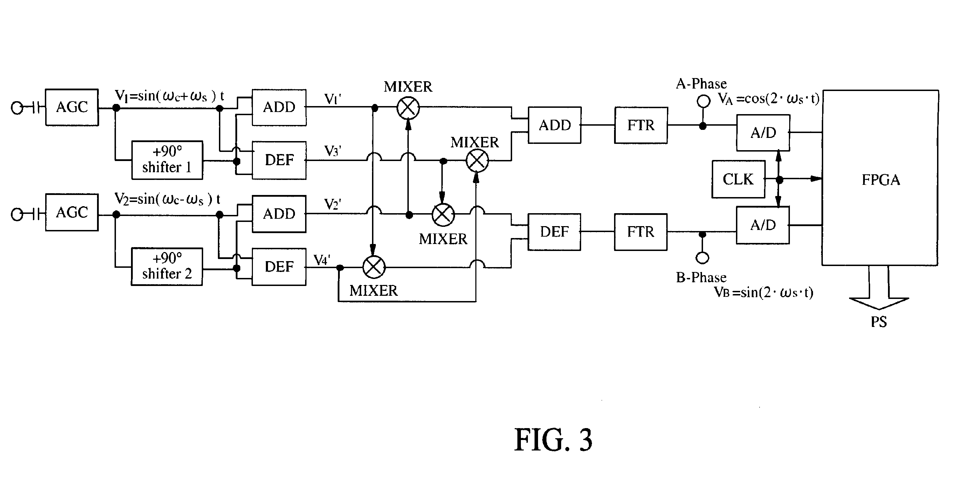

FIG. 3 illustrates a structure of a signal generator in a heterodyne interferometer according to a third embodiment, which is not part of the claimed invention. This signal generator is an illustrative improvement configured to reduce an error of the phase shifter for the signal generator of the first and second embodiments.

Usually, a 90° phase shifter that uses an analog circuit causes a phase error as a frequency of an input signal varies, and thus a final sine signal is likely to contain a frequency component that is twice as high as the heterodyne frequency.

Accordingly, this embodiment generates a phase shifted signal by shifting a signal having an original phase of 0° at phase shifters (shifter1 and shifter2) by $\theta \fallingdotseq$ 90°, and generates a signal by adding the signal having the phase of 0° to the phase shifted signal, and a signal by subtracting the signal having the phase of 0° from the phase shifted signal. Since the post-addition signal and the post-subtraction signal have a phase difference of exactly 90°, the phase difference can be precisely maintained by treating the synthesized signals V1', V2', V3', and V4' made by this method as the signals V1, V2, V3, and V4 in the first and second embodiments. Thereby, a distortion of the sine waveform can be avoided.

FOURTH EMBODIMENT

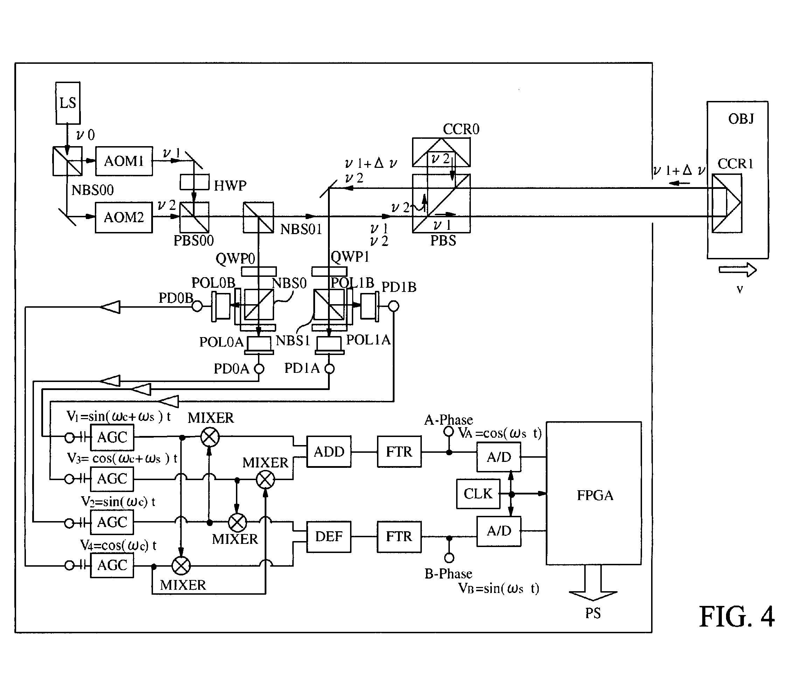

FIG. 4 illustrates a Michelson interferometer as a heterodyne interferometer according to an embodiment of the present invention.

A part of the light flux emitted from the two-frequency light source including a laser light source LS, and acousto-optical elements AOM1 and AOM2 similar to the first embodiment is reflected on the non-polarization beam splitter NBS01 and extracted. The extracted light flux transmits through a quarter waveplate QWP0, and is split by a non-polarization beam splitter NBS0 into a transmission light flux and a reflection light flux.

The transmission light flux (second light) and the reflection light flux (fourth light) enter the signal generator, transmit through a polarizing plate POLOA of a 45° azimuth and a polarizing plate POL0B of a 0° azimuth, and are photoelectrically converted (detected) by a (second) light-receiving element PD0A and a (fourth) light-receiving element PD0B. The transmission light flux and the reflection light flux, i.e., the two signals output from the light-receiving elements PD0A and PD0B, have the same reference frequency as a frequency difference ($\nu$1-$\nu$2) of the two-frequency light source, and a phase difference of 90°. V2(t) (second signal) and V4(t) (fourth signal) denote signals made by normalizing these two signals at an auto gain controller AGC.

On the other hand, the light flux that has transmitted through the non-polarization beam splitter NBS01 is split into a light flux having a frequency $\nu$1 and a light flux having a frequency $\nu$2. The light flux having the frequency $\nu$1 is reflected on the surface of object OBJ and is converted into a light flux having a frequency $\nu$1+$\Delta\nu$. The light flux having the frequency $\nu$2 is reflected on the reference reflective surface CCRO. The light flux having the frequency $\nu$1+$\Delta\nu$ and the light flux reflected on the reference reflective surface are again synthesized by the polarization beam splitter PBS, enter the signal generator, transmit the quarter waveplate QWP1, and are split by the non-polarization beam splitter NBS1 into the transmission light flux and the reflection light flux.

The transmission light flux (first light) transmits through the polarizing plate POL1A of the 45° azimuth, and photoelectrically converted (detected) by the (first) light-receiving element PD1A. The transmission light flux (third light) transmits through the polarizing plate POL1B of the 0° azimuth, and photoelectrically converted (detected) by the (third) light-receiving element PD1B. The transmission light flux and the reflection light flux, or the two signals output from the light-receiving element PD1A (first photodetector) and the light-receiving element PD1B (second photodetector), have frequencies of $\nu$1-$\nu$2+$\Delta\nu$ and a phase difference of 90°. V1(t) (first signal) and V3(t) (third signal) denote signals made by normalizing these two signals at an auto gain controller AGC.

The first periodic signal VA and the second periodic signal VB as sine signals having a phase difference of 90° are generated similar to the second embodiment by the following operations:

$$\mathrm{VA=V1(t)\times V2(t)+V3(t)\times V4(t)=cos(\omega s \bullet t)}$$

$$\mathrm{VB=V2(t)\times V3(t)-V4(t)\times V1(t)=sin(\omega s \bullet t)}$$

This embodiment can more precisely and more stably set a phase difference between the signal V1(t) and the signal V3(t) and a phase difference between the signal V2(t) and the signal V4(t) than the second embodiment that utilizes a phase shifter as an electronic circuit. The phase difference is determined by the precision of the spatial arrangement of the polarizing plates POLOA, POLOB, POL1A, and POL1B, and fixed in principle notwithstanding fluctuations of the heterodyne signals caused by a movement of the object. Therefore, this embodiment can provide a more precisely measurement than the second embodiment that utilizes the phase shifter.

FIFTH EMBODIMENT

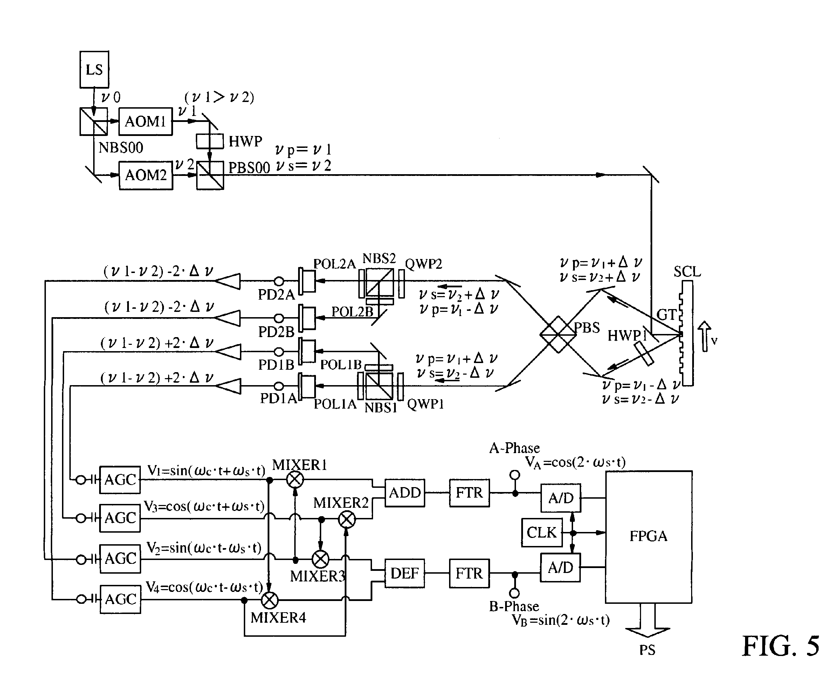

FIG. 5 illustrates a structure of an interferometric encoder including a diffraction grating as a heterodyne interferometer according to another embodiment of the present invention.

A light flux emitted from the two-frequency light source including a laser light source LS, an accoustooptical elements AOM1 and AOM2 similar to the first embodiment is irradiated onto a diffraction grating GT on a scale SCL fixed on an object (not illustrated).

A +1st order diffracted light generated by the diffraction at the diffraction grating GT becomes light fluxes having frequencies $\nu$1+$\Delta\nu$ and $\nu$2+$\Delta\nu$, which in turn enter a polarization beam splitter PBS. The light flux having the frequency $\nu$1+$\Delta\nu$ is p-polarized light flux, and the light flux having the frequency $\nu$2+$\Delta\nu$ is s-polarized light flux.

On the other hand, a -1st order diffracted light generated by the diffraction at the diffraction grating GT becomes light fluxes having frequencies ν1+Δν and ν2+Δν, which in turn enter the polarization beam splitter PBS. Due to the operation of a half waveplate HWP1 arranged between the scale SCL and the polarization beam splitter PBS, the light flux having the frequency ν1+Δν is turned into p-polarized light flux and the light flux having the frequency ν2+Δν is turned into s-polarized light flux, and these light fluxes enter the polarization beam splitter PBS.

The polarization beam splitter PBS synthesizes these four light fluxes into two light fluxes, and outputs these two light fluxes to the following signal generators.

A first synthesized light flux is a light flux synthesized between the light flux having the frequency of ν1+Δν (p-polarized light) and the light flux having the frequency of ν2+Δν (s-polarized light). The first synthesized light flux is converted into a rotationally polarized light flux by a quarter waveplate QWP1, and split into two by a non-polarization beam splitter NBS1. These two split light fluxes (the first light and the third light) transmit through the polarizing plate POL1A of the 45° azimuth and the polarizing plate POL1B of the 0° azimuth and photoelectrically converted (detected) by (first and third) light-receiving elements PD1A and PD1B.

The two split light fluxes that have entered the light-receiving elements PD1A and PD1B and the output signals from the light-receiving elements PD1A and PD1B are sine signals that have a phase difference of 90°. The frequencies of the output signals increase when the scale SCL moves in the arrow direction in FIG. 5. V1(t) (the first signal) and V3(t) (the third signal) denote signals made by normalizing these two output signals at the auto gain controller AGC as follows:

$$V1(t)=\sin\{(\omega c+\omega s)\cdot t\}$$

$$V3(t)=\sin\{(\omega c+\omega s)\cdot t+\pi/2\}$$

A second synthesized light flux is a light flux synthesized between the light flux having the frequency ν1-Δν (p-polarized light) and the light flux having the frequency of ν2+Δν (s-polarized light). This second synthesized light flux is converted into a rotationally polarized light flux by the quarter waveplate QWP2, and split into two by a non-polarization beam splitter NBS2. These two split light fluxes (the second light and the fourth light) transmit through the polarizing plate POL2A of the 45° azimuth and the polarizing plate POL2B of the 0° azimuth and photoelectrically converted (detected) by (second and fourth) light-receiving elements PD2A and PD2B.

The two split light fluxes that have entered the light-receiving elements PD2A and PD2B and the output signals from the light-receiving elements PD2A and PD2B are sine signals that have a phase difference of 90°. The frequencies of the output signals decrease when the scale SCL moves in the arrow direction in FIG. 5. V2(t) (the second signal) and V4(t) (the fourth signal) denote signals made by normalizing these two output signals at the auto gain controller AGC as follows:

$$V2(t)=\sin\{(\omega c-\omega s)\cdot t\}$$

$$V4(t)=\sin\{(\omega c-\omega s)\cdot t+\pi/2\}$$

The first periodic signal VA and the second periodic signal VB as sine signals having a phase difference of 90° are generated similar to the first embodiment by the following operations:

$$VA=V1(t)\times V2(t)+V3(t)\times V4(t)=\cos(2\cdot\omega s\cdot t)$$

$$VB=V2(t)\times V3(t)-V4(t)\times V1(t)=\sin(2\cdot\omega s\cdot t)$$

This embodiment can more precisely and more stably set a phase difference between the signal V1(t) and the signal V3(t) and a phase difference between the signal V2(t) and the signal V4(t) than the first embodiment that utilizes a phase shifter as an electronic circuit. The phase difference is determined by the precision of the spatial arrangement of the polarizing plates POLOA, POLOB, POL1A, and POL1B, and fixed in principle notwithstanding fluctuations of the heterodyne signals caused by a movement of the object. Therefore, this embodiment can provide a more precisely measurement than the first embodiment that utilizes the phase shifter.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

For instance, while the above embodiments discuss the Michelson interferometer and the interferometric encoder including a diffraction grating, the present invention is applicable to other heterodyne interferometers.

The analog circuits for an addition, a subtraction, and a multiplication may be replaced with digital signal processors, such as an A/D converter, a FPGA, and a CPU.

The light source may use a Super-Luminescent diode (SLD) or a light emitting diode (LED) in addition to a laser. The two-frequency light source used for each embodiment may have a structure other than that using an acousto-optical element.

A unit configured to generate signals having an optical phase difference of 90° may be replaced with a unit that includes another polarization optical configuration or a unit that utilizes spatial interference pattern scanning.

An addition and a subtraction in each embodiment may be inverted depending upon phase settings between the heterodyne signals or between the heterodyne signal and the reference frequency signal.

**Claims**

1. A heterodyne interferometer comprising:

   a light source (LS, NBS00, AOM1, AOM2) configured to emit two light fluxes having respective frequencies (v1, v2) that are different from each other and having respective polarizations that are orthogonal to each other;
   an optical system configured to irradiate at least one of the two light fluxes onto an object (OBJ, SCL), and to generate two light fluxes through first and second interferences, the first interference being an interference between a light flux obtained by the irradiation and another light flux; and
   a signal generator configured to generate a first periodic signal and a second periodic signal which have a 90° phase difference from each other based on the generated two light fluxes,
   **characterized in that** the optical system includes:

   (i) a first optical unit including a first quarter waveplate (QWP1) configured to cause the first interference to occur and first polarizing plates respectively configured to generate first and third light fluxes from a light flux obtained through the first interference, and
   (ii) a second optical unit including a second quarter waveplate (QWPO; QWP2) configured to cause the second interference to occur and second polarizing plates respectively configured to generate second and fourth light fluxes from a light flux obtained through the second interference,
   and **in that** the signal generator includes:
   (iii) four light-receiving elements (PD0A, PD0B, PD1A, PD1B, PD2A, PD2B) configured to perform photoelectric conversions of the first to fourth light fluxes to respectively output first to fourth signals,
   and **in that** the signal generator is configured to:
   (iv) generate the first periodic signal by adding a signal that is obtained by multiplying the first signal by the second signal to a signal that is obtained by multiplying the third signal by the fourth signal, and
   (v) generate the second periodic signal by subtracting a signal that is obtained by multiplying the first signal by the fourth signal from a signal that is obtained by multiplying the second signal by the third signal.

2. The heterodyne interferometer according to claim 1, wherein the signal generator includes filters (FTR) respectively configured to filter
   the first periodic signal and the second periodic signal.

3. The heterodyne interferometer according to claim 1, wherein the optical system includes a diffraction grating (GT) arranged on the object (SCL), and is configured to irradiate the two light fluxes emitted by the light source onto the diffraction grating to generate respective two +1st order diffracted light fluxes, and respective two -1st order diffracted light fluxes, the first and second quarter waveplates being configured to cause one of the two +1st order diffracted light fluxes, that is generated by one of the two light fluxes, and one of the two -1st order diffracted light fluxes, that is generated by the other of the two light fluxes, to interfere with each other, and to cause the other of the two +1st order diffracted light fluxes and the other of the two -1st order diffracted light fluxes, to interfere with each other.

4. The heterodyne interferometer according to claim 1, wherein the optical system is configured to cause an interference to occur, as the first interference, between a light flux obtained by irradiating one of the two light fluxes emitted by the light source onto the object (OBJ) and the other of the two light fluxes emitted by the light source, and to cause an interference to occur, as the second interference, between the two light fluxes emitted by the light source.

**Patentansprüche**

1. Heterodyninterferometer mit:

einer Lichtquelle (LS, NBS00, AOM1, AOM2), die konfiguriert ist, zwei Lichtflüsse mit jeweiligen Frequenzen (v1, v2) zu emittieren, die verschieden voneinander sind und jeweilige Polarisationen haben, die orthogonal zueinander sind;
einem optischen System, das konfiguriert ist, zumindest einen der zwei Lichtflüsse auf ein Objekt (OBJ, SCL) zu strahlen, und zwei Lichtflüsse durch erste und zweite Interferenzen zu erzeugen, wobei die erste Interferenz eine Interferenz zwischen einem Lichtfluss ist, der durch die Bestrahlung und einen anderen Lichtfluss erhalten wird; und
einem Signalgenerator, der konfiguriert ist, ein erstes periodisches Signal und ein zweites periodisches Signal, die voneinander eine Phasendifferenz von 90° haben, basierend auf den erzeugten zwei Lichtflüssen zu erzeugen,
**dadurch gekennzeichnet, dass** das optische System enthält:

(i) eine erste optische Einheit einschließlich einer ersten Viertelwellenplatte (QWP1), die konfiguriert ist, zu verursachen, dass die erste Interferenz auftritt, und erste Polarisierungsplatten, die jeweils konfiguriert sind, erste und dritte Lichtflüsse von einem Lichtfluss zu erzeugen, der durch die erste Interferenz erhalten wird, und
(ii) einer zweiten optischen Einheit einschließlich einer zweiten Viertelwellenplatte (QWPO, QWP2), die konfiguriert ist, zu verursachen, dass die zweite Interferenz auftritt, und zweite Polarisierungsplatten, die jeweils konfiguriert sind, zweite und vierte Lichtflüsse aus einem Lichtfluss zu erzeugen, der durch die zweite Interferenz erhalten wird,

und dadurch, dass der Signalgenerator enthält:

(iii) vier lichtempfangende Elemente (PD0A, PD0B, PD1A, PD1B, PD2A, PD2B), die konfiguriert ist, fotoelektrische Umwandlungen der ersten bis vierten Lichtflüsse durchzuführen, um jeweils erste bis vierte Signale auszugeben,

und dadurch, dass der Signalgenerator konfiguriert ist,

(iv) das erste periodische Signal durch Addieren eines Signals, das durch Multiplizieren des ersten Signals mit dem zweiten Signal zu einem Signal, das erhalten wird durch Multiplizieren des dritten Signals mit dem vierten Signal, zu erzeugen, und
(v) das zweite periodische Signal durch Subtrahieren eines Signals, das durch Multiplizieren des ersten Signals mit dem vierten Signal erhalten wird, von einem Signal, das durch Multiplizieren des zweiten Signals mit dem dritten Signal erhalten wird, zu erzeugen.

2. Heterodyninterferometer nach Anspruch 1, wobei der Signalgenerator Filter (FTR) enthält, die jeweils konfiguriert sind, das erste periodische Signal und das zweite periodische Signal zu filtern.

3. Heterodyninterferometer nach Anspruch 1, wobei das optische System ein Beugungsgitter (GT) enthält, das auf dem Objekt (SCL) angeordnet ist und konfiguriert ist, die zwei Lichtflüsse abzustrahlen, die durch die Lichtquelle auf das Beugungsgitter emittiert werden, um jeweilige zwei gebeugte Lichtflüsse +1. Ordnung zu erzeugen, und jeweilige zwei gebeugte Lichtflüsse -1. Ordnung zu erzeugen, wobei die ersten und zweiten Viertelwellenplatten konfiguriert sind, einen der beiden gebeugten Lichtflüsse +1. Ordnung, der durch einen der zwei Lichtflüsse erzeugt ist, und einen der zwei gebeugten Lichtflüsse -1. Ordnung, der durch den anderen der zwei Lichtflüsse erzeugt ist, zu veranlassen, miteinander zu interferieren, und die anderen beiden der gebeugten Lichtflüsse +1. Ordnung und den anderen der zwei gebeugten Lichtflüsse -1. Ordnung zu veranlassen, miteinander zu interferieren.

**4.** Heterodyninterferometer nach Anspruch 1, wobei das optische System konfiguriert ist, zu veranlassen, dass eine Interferenz als die erste Interferenz zwischen einem Lichtfluss, der durch Bestrahlen von einem der zwei Lichtflüsse, der von der Lichtquelle auf das Objekt (OBJ) emittiert wird, und den anderen der zwei Lichtflüsse, der durch die Lichtquelle emittiert wird, auftritt, und zu veranlassen, dass eine Interferenz als die zweite Interferenz zwischen den zwei Lichtflüssen, die durch die Lichtquelle emittiert werden, auftritt.

**Revendications**

**1.** Interféromètre hétérodyne comprenant :

une source de lumière (LS, NBS00, AOM1, AOM2) configurée pour émettre deux flux lumineux ayant des fréquences respectives (v1, v2) qui sont différentes l'une de l'autre et ayant des polarisations respectives qui sont orthogonales l'une à l'autre ;
un système optique configuré pour projeter au moins l'un des deux flux lumineux sur un objet (OBJ, SCL) et pour générer deux flux lumineux par des première et deuxième interférences, la première interférence étant une interférence entre un flux lumineux obtenu par la projection et un autre flux lumineux ; et
un générateur de signaux configuré pour générer un premier signal périodique et un deuxième signal périodique qui sont déphasés l'un par rapport à l'autre de 90° sur la base des deux flux lumineux générés,
**caractérisé en ce que** le système optique comprend :

(i) une première unité optique comportant une première lame quart d'onde (QWP1) configurée pour faire en sorte que la première interférence se produise, et des premières lames polarisantes respectivement configurées pour générer des premier et troisième flux lumineux à partir d'un flux lumineux obtenu au moyen de la première interférence, et
(ii) une deuxième unité optique comportant une deuxième lame quart d'onde (QWP0, QWP2) configurée pour faire en sorte que la deuxième interférence se produise et des deuxièmes lames polarisantes respectivement configurées pour générer des deuxième et quatrième flux lumineux à partir d'un flux lumineux obtenu au moyen de la deuxième interférence,

et **en ce que** le générateur de signaux comporte :

(iii) quatre éléments photorécepteurs (PD0A, PD0B, PD1A, PD1B, PD2A, PD2B) configurés pour effectuer des conversions photoélectriques des premier à quatrième flux lumineux afin de fournir respectivement en sortie des premier à quatrième signaux,

et **en ce que** le générateur de signaux est configuré pour :

(iv) générer le premier signal périodique en additionnant un signal qui est obtenu en multipliant le premier signal par le deuxième signal à un signal qui est obtenu en multipliant le troisième signal par le quatrième signal, et
(v) générer le deuxième signal périodique en soustrayant un signal qui est obtenu en multipliant le premier signal par le quatrième signal à un signal qui est obtenu en multipliant le deuxième signal par le troisième signal.

**2.** Interféromètre hétérodyne selon la revendication 1, dans lequel le générateur de signaux comporte des filtres (FTR) respectivement configurés pour filtrer le premier signal périodique et le deuxième signal périodique.

**3.** Interféromètre hétérodyne selon la revendication 1, dans lequel le système optique comprend un réseau de diffraction (GT) disposé sur l'objet (SCL), et est configuré pour projeter les deux flux lumineux émis par la source de lumière vers le réseau de diffraction afin de générer deux flux lumineux diffractés respectifs d'ordre +1 et deux flux lumineux diffractés respectifs d'ordre -1, les première et deuxième lames quart d'onde étant configurées pour faire en sorte que l'un des deux flux lumineux diffractés d'ordre +1 qui est généré par l'un des deux flux lumineux, et que l'un des deux flux lumineux diffractés d'ordre -1 qui est généré par l'autre des deux flux lumineux, interfèrent l'un avec l'autre, et pour faire en sorte que l'autre des deux flux lumineux diffractés d'ordre +1 et que l'autre des deux flux lumineux diffractés d'ordre -1, interfèrent l'un avec l'autre.

4. Interféromètre hétérodyne selon la revendication 1, dans lequel le système optique est configuré pour faire en sorte qu'une interférence se produise en tant que première interférence entre un flux lumineux obtenu en projetant l'un des deux flux lumineux émis par la source de lumière vers l'objet (OBJ) et l'autre des deux flux lumineux émis par la source de lumière, et pour faire en sorte qu'une interférence se produise en tant que deuxième interférence entre les deux flux lumineux émis par la source de lumière.

FIG. 1

FIG. 2

FIG. 3

FIG. 4

LS

$\nu$0

$(\nu 1 > \nu 2)$

NBS00

AOM1

$\nu$1

HWP

$\nu$p= $\nu$1

AOM2

$\nu$2

PBS00

$\nu$s= $\nu$2

$(\nu 1 - \nu 2) -2 \cdot \Delta \nu$

POL2A  NBS2  QWP2

PD2A

$\nu$p=$\nu_1$+$\Delta \nu$
$\nu$s=$\nu_2$+$\Delta \nu$

SCL

$(\nu 1 - \nu 2) -2 \cdot \Delta \nu$

POL2B

PD2B

$\nu$s=$\overline{\nu_2}$+$\Delta \nu$
$\nu$p=$\nu_1$-$\Delta \nu$

PBS

HWP1

GT

$(\nu 1 - \nu 2) +2 \cdot \Delta \nu$

POL1B

PD1B

$\nu$p=$\nu_1$+$\Delta \nu$
$\nu$s=$\nu_2$-$\Delta \nu$

V

$(\nu 1 - \nu 2) +2 \cdot \Delta \nu$

PD1A

POL1A  NBS1  QWP1

$\nu$p=$\nu_1$-$\Delta \nu$
$\nu$s=$\nu_2$-$\Delta \nu$

A-Phase
$V_A = \cos(2 \cdot \omega s \cdot t)$

AGC

$V_1 = \sin(\omega c \cdot t + \omega s \cdot t)$

MIXER1

ADD

FTR

A/D

AGC

$V_3 = \cos(\omega c \cdot t + \omega s \cdot t)$

MIXER2

CLK

FPGA

AGC

$V_2 = \sin(\omega c \cdot t - \omega s \cdot t)$

MIXER3

DEF

FTR

A/D

AGC

$V_4 = \cos(\omega c \cdot t - \omega s \cdot t)$

MIXER4

B-Phase
$V_B = \sin(2 \cdot \omega s \cdot t)$

PS

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2845700 B

- US 5436724 A

**Non-patent literature cited in the description**

- **CHOI HYUNSEUNG et al.** *Review of Scientific Instruments,* 2005, vol. 76 (9), 93105-093105
- **MINSUK HONK et al.** *Knowledge-based Intelligent Information and Engineering Systems Lecture Notes in Computer Science,* 2006, 545-552

- **YIM NOH-BIN et al.** *Measurement Science and Technology,* 2000, vol. 11 (8), 1131-1137